# DEMANDE DE BREVET EUROPEEN

(11) **EP 1 978 479 A1**
(43) Date de publication de la demande: **08.10.2008**
(21) Numéro de dépôt: 08103377.1
(22) Date de dépôt: 04.04.2008
(51) Int. Cl.: G06Q 20/00

(54) **Cryptogramme dynamique**

(30) Priorité: 06.04.2007 FR 0702551
(71) Demandeur: GROUPEMENT DES CARTES BANCAIRES "CB", 75008 Paris (FR)
(72) Inventeur: Meggle, Claude, 75013 PARIS (FR); Chassigneux, Pierre, 75016 PARIS (FR)
(74) Mandataire: Cabinet Plasseraud

(57) **Abrégé**

Un procédé de validation d'une transaction à distance utilisant une carte bancaire gérée par un organisme financier, entre un débiteur (2) titulaire de ladite carte et un créancier (1), comporte:
- la réception (E13) d'une requête de validation en provenance du créancier par un serveur (3) de l'organisme financier, comportant au moins le numéro de carte (PAN) et un champ de données (CVXD) associé à la carte et variant avec chaque transaction effectuée par le débiteur avec sa carte ; et
- la vérification (E14) par l'organisme financier que le champ de données correspond effectivement à la carte ; et
- l'émission (E15) par le serveur de l'organisme financier à destination du créancier d'une autorisation de transaction si la vérification est positive.

## Description

La présente invention concerne un procédé et un serveur de validation d'une transaction financière exécutée à distance à l'aide d'une carte bancaire. Elle concerne également un produit programme d'ordinateur pour mettre en oeuvre le procédé de validation.

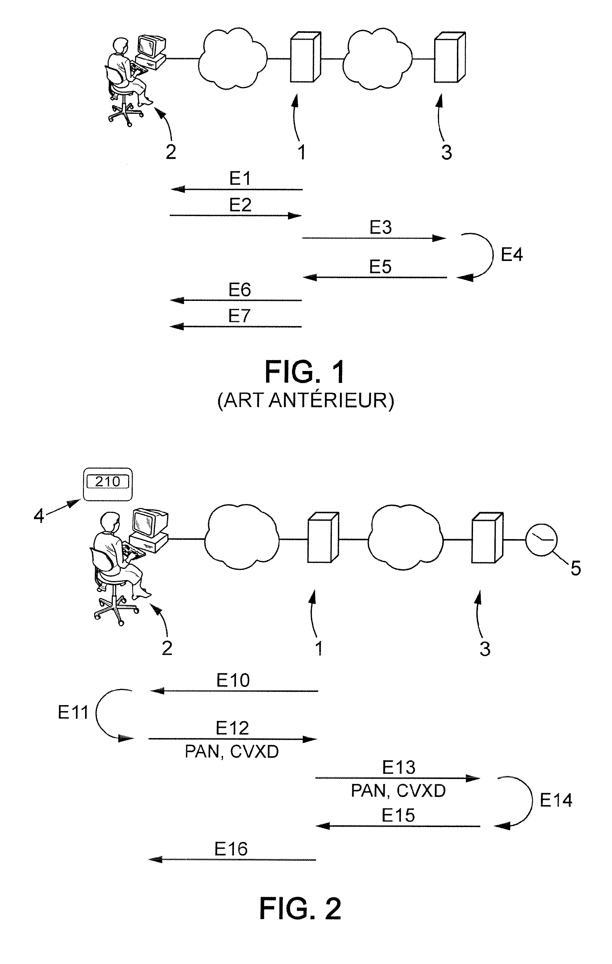

Lors de vente à distance via le réseau internet ou par téléphone, le moyen de paiement le plus utilisé est la carte bancaire. A cet effet, figure 1, le protocole le plus couramment utilisé consiste pour le commerçant 1, c'est-à-dire le créancier de la transaction, à demander à son client 2, le débiteur de la transaction, le numéro et la date de fin de validité d'une carte de paiement, étapes E1 - E2 puis à transmettre, étape E3, ces informations avec d'autres données liées à la transaction telles que le montant de celle-ci ou l'identifiant du commerçant à la banque 3, gestionnaire de la carte.

La banque 3 vérifie, étape E4, la cohérence des données transmises, le montant de la transaction par rapport à un plafond de dépenses autorisées, etc. et envoie, étape E5, un message de validation au commerçant, message comportant un numéro de validation. Le commerçant transmet, étape E6, au client une copie du message de validation et enclenche, étape E7, le processus de livraison du produit ou service commandé.

Or ce protocole est relativement aisé à frauder dans la mesure où les numéros de carte sont facilement accessibles et les dates de validité ne varient qu'entre 24 ou 36 valeurs possibles (les mois des deux ou trois prochaines années).

Ainsi, par exemple, il existe des logiciels dans lesquels, après qu'un numéro de carte valide a été saisi, ceux-ci exécutent des transactions en essayant automatiquement différentes dates de fin de validité.

Pour renforcer la sécurité des transactions et s'assurer que, au minimum le client est réellement en possession de la carte, il lui est demandé de saisir en plus un numéro de 3 ou 4 chiffres imprimé le plus souvent au dos de la carte. Le numéro n'est pas embossé et son lien avec la carte n'est connu que de la banque émettrice de la carte.

Ce numéro, appelé souvent dans la littérature « cryptogramme visuel » est également connu sous les références CVX2 pour le Groupement d'Intérêt Economique Cartes Bancaires (France), CVV2 pour VISA (USA) ou CVC2 pour Mastercard (USA),

Le protocole de transmission entre les créanciers et les banques est actuellement le plus souvent basé sur SSL (*Secure Socket Layer,* Couche Sécurisée de Sockets) ou TLS (*Transport Layer Security,* Sécurité de la Couche Transport).

Le protocole prévoit, de façon standardisé, le transport du cryptogramme visuel dans la requête de validation d'une transaction.

Cependant, bien que par convention les commerçants s'engagent à ne pas stocker le cryptogramme visuel, l'homme du métier peut aisément imaginer différentes attaques relativement faciles à mettre en oeuvre pour récupérer, avec le numéro de la carte, la valeur du cryptogramme visuel.

Aussi serait-il souhaitable de disposer d'un procédé de validation qui renforce la sécurité des transactions à distance par carte sans modifier les protocoles de liaison entre les commerçants et les organismes financiers.

Pour résoudre ce problème, selon un aspect de l'invention, un procédé de validation d'une transaction à distance utilisant une carte bancaire, entre un débiteur titulaire de ladite carte et un créancier, ladite carte étant associée à un compte géré par un organisme financier, et étant identifiée par au moins un numéro de carte, comporte :
- la réception d'une requête de validation en provenance du créancier par un serveur de l'organisme financier, ladite requête étant transmise par un réseau de données, ladite requête comportant au moins le numéro de carte et un champ de données associé à la carte ;
   et
- la vérification par l'organisme financier que le champ de données correspond effectivement à la carte, et
- l'émission par le serveur de l'organisme financier à destination du créancier par l'intermédiaire du réseau de données, d'une autorisation de transaction si la vérification est positive.

De plus, dans ce procédé, le débiteur possède un terminal de télécommunication adapté pour fournir au débiteur le champ de données (CVXD) à utiliser pour la transaction et en ce que le débiteur demande le champ de données par envoi d'un message au serveur et que celui-ci lui envoie ledit champ de données par un message alphanumérique reçu sur le terminal de télécommunication.

Le procédé est tel que le champ de données varie avec chaque transaction effectuée par le débiteur avec sa carte, et avantageusement, utilise un moyen de transmission différent de celui utilisé par la transaction.

Ainsi le champ de données, ou cryptogramme visuel, ne permet pas, avantageusement, à un tiers de rejouer la transaction avec les mêmes paramètres.

Dans un mode de réalisation particulier, le numéro d'appel dudit terminal de télécommunication est préalablement enregistré dans les moyens de stockage du serveur financier de telle sorte que le champ de données n'est envoyé sur le terminal de télécommunication que si la demande de champ de données est générée à partir dudit terminal de télécommunication.

Selon un second aspect de l'invention, un serveur de validation d'une transaction à distance utilisant une carte bancaire entre un débiteur titulaire de ladite carte et un créancier, ladite carte étant identifiée par au moins un numéro de carte, comporte :
- des moyens de connexion à un réseau de données adapté pour transmettre des messages de données entre le créancier et le serveur,
- des moyens de réception d'une requête de validation de la transaction en provenance du créancier par l'intermédiaire du réseau de données, ladite requête comportant au moins le numéro de la carte et un champ de données associé à la carte,
- des moyens de vérification que le champ de données est correctement associé à la carte, et variant avec chaque transaction effectuée par le débiteur avec sa carte,
- des moyens d'émission d'un message de validation de la transaction à destination du créancier par l'intermédiaire du réseau de données, lesdits moyens d'émission n'étant activés que si la vérification du champ de données est positive. Le serveur est adapté pour envoyer le champs de données sur un terminal de communication de l'utilisateur sur requête de celui-ci.

Selon un troisième aspect de l'invention, un produit programme d'ordinateur comprend des instructions de code de programme pour l'exécution des étapes du procédé précédent lorsque ledit programme est exécuté sur un ordinateur.

L'invention sera mieux comprise à la lecture de la description qui suit, donnée uniquement à titre d'exemple, et faite en référence aux dessins en annexe dans lesquels :
- la figure 1 est une vue schématique d'un système de transaction à distance utilisant une carte bancaire selon l'art antérieur ;
- la figure 2 est une vue schématique d'un système de transaction à distance et du procédé de validation utilisant une carte bancaire selon un premier mode de réalisation de l'invention ;
- la figure 3 est une vue schématique d'un deuxième mode de réalisation d'un procédé selon l'invention ;
- la figure 4 est une vue schématique d'un troisième mode de réalisation d'un procédé selon l'invention ;
   et
- la figure 5 est une vue schématique d'un serveur de validation selon un mode de réalisation de l'invention.

Dans les différents dessins, un élément identique ou similaire porte une référence identique.

En référence à la figure 2, le client a à sa disposition un petit dispositif 4 portable dit « *token* » comportant une horloge, un numéro de série ou diversificateur et un petit écran.

L'horloge du « *token* » est adaptée pour rester synchronisée en permanence, dans une plage d'erreur prédéterminée, avec une horloge 5 reliée au serveur de la banque.

Lors de l'initialisation du « *token* », par exemple lors de la remise de celui-ci par les services de la banque au client, le diversificateur est stocké dans le serveur 3 de la banque en association avec le numéro de la carte.

Au cours d'une transaction, le commerçant 2 demande classiquement au client le numéro de carte, la date de fin de validité et le cryptogramme visuel.

Le client consulte, étape E11, alors son « *token »* et indique, étape E12, comme cryptogramme visuel, le nombre CVXD apparaissant sur l'écran, ainsi que son numéro de carte PAN.

Ce nombre CVXD est calculé par le « *token* » selon un algorithme Alg1 connu et défini par la banque émettrice, l'algorithme prenant en paramètres d'entrée la date et l'heure de l'horloge au moment de la demande de CVXD et le diversificateur.

Le CVXD est envoyé, étape E13, par le commerçant à la banque selon le protocole habituel, la valeur CVXD prenant la place du champ CVX2.

A réception de la requête, le serveur extraie, étape E14, le diversificateur correspondant au numéro de carte PAN et exécute l'algorithme Alg1 en utilisant l'heure de réception de la requête et le diversificateur.

Si le nombre ainsi obtenu est égal au nombre CVXD envoyé, cela indique que le client est en possession du « *token »* et est donc bien le propriétaire de la carte. La transaction est alors validée, étapes E15 - E16, selon les règles habituelles du protocole.

Il est à noter que, de par le mode de fonctionnement, l'heure de demande d'un CVXD au « *token* » précède de quelques secondes ou minutes l'heure de réception de la requête de validation.

Afin de résoudre ce décalage, différentes méthodes sont utilisables et connues de l'homme du métier.

Par exemple, l'heure servant de base au calcul est arrondie à quelques minutes près, par exemple aux minutes multiples de 5.

Ainsi, de façon générale, l'heure de demande et l'heure de réception appartiennent au même intervalle. Si, par hasard, les deux heures se trouvent dans deux intervalles successifs, le serveur est programmé pour vérifier que, si le CVXD a été calculé avec l'heure de l'intervalle précédent, la transaction également soit validée.

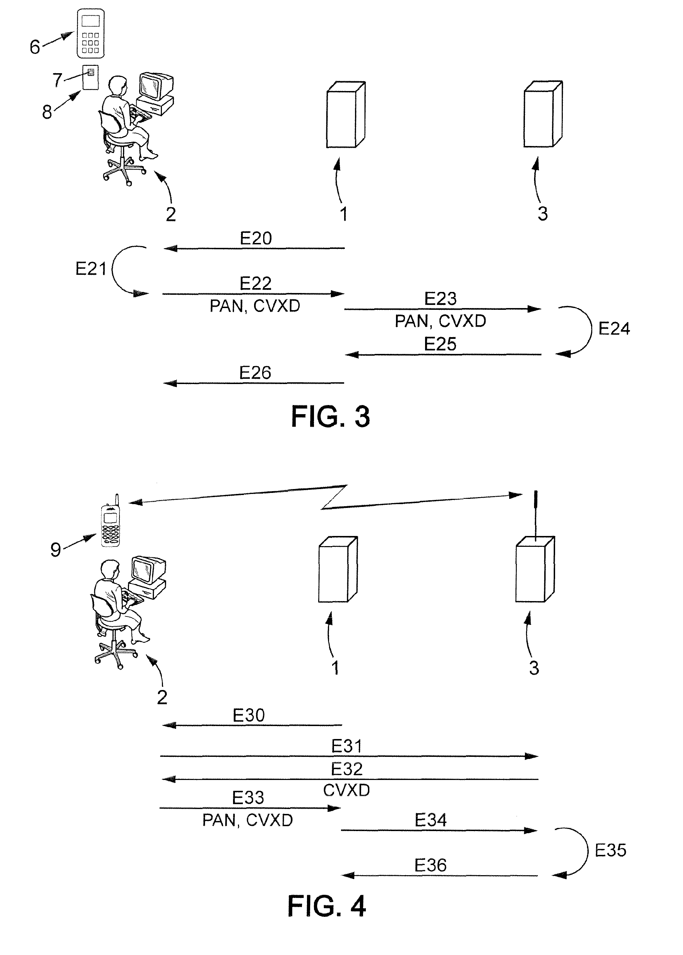

Dans un deuxième mode de réalisation, figure 3, le client reçoit un dispositif 6 appelé certificateur. Un certificateur est un dispositif se présentant sous la forme d'une calculette disposant d'une interface électrique avec la puce 7 d'une carte bancaire 8.

Lors d'une transaction pour obtenir, étape 21, un cryptogramme visuel, le client introduit sa carte 8 dans le certificateur 6, tape son code secret et le certificateur affiche un code CVXD que le client saisit dans le champ correspondant du formulaire du commerçant.

Comme lors du mode de réalisation précédent, le champ CVXD est transmis, étape E23, au serveur de la banque. Celui-ci est connecté à une boîte noire possédant les mêmes algorithmes de calcul que la puce de la carte. Le serveur fournit à la boîte noire le numéro de la carte et celui-ci calcule le cryptogramme visuel correspondant qui est comparé au cryptogramme visuel transmis.

Le calcul du cryptogramme visuel est avantageusement diversifié en utilisant le montant de la transaction, donnée qui est classiquement transmise par le commerçant dans la requête de validation.

Dans un troisième mode de réalisation, figure 4, le client est en possession d'un terminal 9 de télécommunication mobile tel qu'un téléphone GSM.

Lors de l'inscription au service, l'utilisateur indique à sa banque le numéro d'appel de son téléphone mobile.

Lors de la saisie des éléments de transaction, le client demande, étape E31, à sa banque un cryptogramme visuel CVXD.

Cette demande est indépendante des liaisons avec le commerçant. Par exemple, le client envoie un message court à un serveur de message court, ou bien il fait sa demande auprès d'un serveur vocal.

En retour, la banque envoie, étape E32, le cryptogramme visuel CVXD à utiliser pour la transaction. Cet envoi se fait obligatoirement sur le téléphone référence lors de l'inscription au service pour éviter une tentative d'obtention d'un cryptogramme visuel par une personne non habilitée.

Si le téléphone ne cache pas son numéro lors d'un appel, l'envoi se fait avantageusement dans l'appel de demande après vérification que celui-ci est bien initié par le téléphone enregistré. Ainsi, dans le cas d'un serveur vocal, celui-ci dicte au client, en réponse à sa demande, le cryptogramme visuel à saisir.

A la réception, étape E34, de la requête de validation envoyée par le commerçant, le serveur vérifie, étape E35, alors que le cryptogramme visuel transmis par la requête est le même que celui envoyé par téléphone.

Par rapport à un serveur classique de validation géré par un organisme financier, dans les modes de réalisation décrits, le serveur doit être adapté pour gérer les cryptogrammes visuels dynamiques.

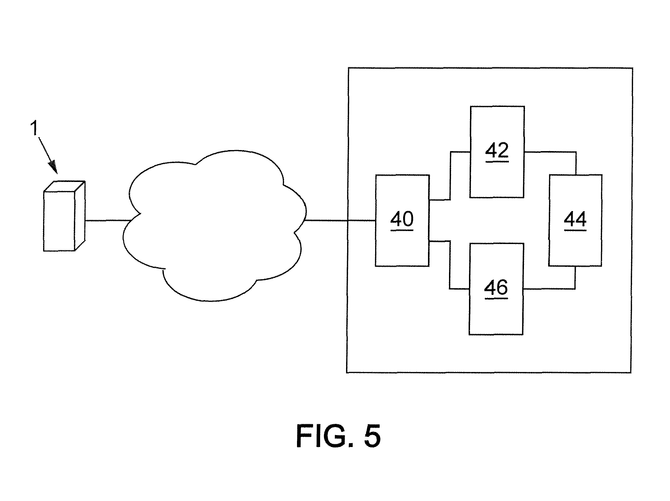

Ainsi, dans un mode de réalisation, figure 5, le serveur de validation comporte des moyens 40 de connexion au réseau de données pour transmettre et recevoir des messages de données avec le créancier.

Il comporte également des moyens 42 de réception de la requête de validation de la transaction, requête provenant du créancier et comportant au moins le numéro de la carte et un champ de données associé à la carte.

Il comporte des moyens 44 de vérification de la validité du champ de données en relation avec le numéro de carte et des moyens 46 d'émission d'un message de validation à destination du créancier. Les moyens 46 d'émission ne sont activés que si le champ de données est validé.

On comprend que le procédé décrit dans ses divers modes de réalisation peut être mis en oeuvre sous la forme d'un produit programme d'ordinateur exécuté sur un ordinateur.

Cet ordinateur peut être un ordinateur classique ou combiner un ordinateur classique avec des éléments spécifiques tels qu'une boite noire de calcul cryptographique, un serveur vocal ou un serveur de messages courts, une horloge, etc.

L'homme du métier sait, à partir des descriptions de ces modes de réalisation et des revendications, réaliser de nombreuses autres variantes de réalisation.

Par exemple, la banque peut fournir au client une liste de nombres CVXD à usage unique sous forme, par exemple, d'une feuille à gratter. A chaque transaction, le client gratte dans un ordre prédéfini une zone pour faire apparaître un numéro. Le serveur possède alors dans une zone de stockage la même liste associée au numéro de la carte pour effectuer les vérifications.

De même, selon les modes de réalisation, et les enjeux de protection, le procédé tolère que le cryptogramme visuel envoyé dans la requête de validation fasse partie d'une courte liste de cryptogrammes visuels valides tel qu'il a été décrit, par exemple, avec le premier mode de réalisation utilisant un « *token* ».

On a ainsi décrit un procédé et un serveur de validation de transaction qui permet d'augmenter significativement le degré de protection contre les fraudes en limitant les possibilités de rejeux sans modifier le protocole de gestion des transactions entre le client, le commerçant et la banque.

## Revendications

1. Procédé de validation d'une transaction à distance utilisant une carte bancaire, entre un débiteur titulaire de ladite carte et un créancier, ladite carte étant associée à un compte géré par un organisme financier, et étant identifiée par au moins un numéro de carte ledit procédé comportant :
- la réception (E13, E23, E34) d'une requête de validation en provenance du créancier par un serveur de l'organisme financier, ladite requête étant transmise par un réseau de données, ladite requête comportant au moins le numéro de carte (PAN) et un champ de données (CVXD) associé à la carte et variant avec chaque transaction effectuée par le débiteur avec sa carte ; et
- la vérification (E14, E24, E35) par l'organisme financier que le champ de données correspond effectivement à la carte, et
- l'émission (E15, E25, E36) par le serveur de l'organisme financier à destination du créancier par l'intermédiaire du réseau de données, d'une autorisation de transaction si la vérification est positive;
**caractérisé en ce que** le débiteur possède un terminal de télécommunication adapté pour fournir au débiteur le champ de données (CVXD) à utiliser pour la transaction et **en ce que** le débiteur demande le champ de données par envoi d'un message au serveur et que celui-ci lui envoie ledit champ de données par un message alphanumérique reçu sur le terminal de télécommunication.

2. Procédé selon la revendication 1, **caractérisé en ce que** le numéro d'appel dudit terminal de télécommunication est préalablement enregistré dans les moyens de stockage du serveur financier de telle sorte que le champ de données n'est envoyé sur le terminal de télécommunication que si la demande d'un champ de données est générée à partir dudit terminal de télécommunication.

3. Serveur de validation d'une transaction à distance utilisant une carte bancaire entre un débiteur titulaire de ladite carte et un créancier, ladite carte étant identifiée par au moins un numéro de carte, comportant :
- des moyens (40) de connexion à un réseau de données adapté pour transmettre des messages de données entre le créancier et le serveur,
- des moyens (42) de réception d'une requête de validation de la transaction en provenance du créancier par l'intermédiaire du réseau de données, ladite requête comportant au moins le numéro de la carte et un champ de données associé à la carte et variant avec chaque transaction effectuée par le débiteur avec sa carte,
- des moyens (44) de vérification que le champ de données est correctement associé à la carte,
- des moyens (46) d'émission d'un message de validation de la transaction à destination du créancier par l'intermédiaire du réseau de données, lesdits moyens d'émission n'étant activés que si la vérification du champ de données est positive,
**caractérisé en ce que** ledit serveur est adapté pour envoyer ledit champ de données sur un terminal de télécommunication dudit utilisateur sur requête de celui-ci.

4. Produit programme d'ordinateur comprenant des instructions de code de programme pour l'exécution des étapes du procédé selon l'une quelconque des revendications 1 à 2 lorsque ledit programme est exécuté sur un ordinateur.
